# EUROPÄISCHE PATENTSCHRIFT

(11) **EP 0 582 117 B1**
(45) Veröffentlichungstag und Bekanntmachung des Hinweises auf die Patenterteilung: **13.03.1996**
(21) Anmeldenummer: 93111493.8
(22) Anmeldetag: 17.07.1993
(51) Int. Cl.: B62D 65/00

(54) **Bearbeitungsstation für Fahrzeugkarosserien in einer Transferlinie**
Workstation for vehicle body work in a transfer line
Poste de travail pour une carrosserie de véhicule dans une ligne de transfert

(30) Priorität: 04.08.1992 DE 9210396 U
(43) Veröffentlichungstag der Anmeldung: 09.02.1994
(73) Patentinhaber: KUKA Schweissanlagen & Roboter GmbH, D-86165 Augsburg (DE)
(72) Erfinder: Weihmayr, Josef, D-86465 Welden-Reutern (DE)
(74) Vertreter: Ernicke, Hans-Dieter, Dipl.-Ing.

(56) Entgegenhaltungen:
- EP-A- 0 261 297
- DE-A- 3 414 387
- DE-A- 3 823 947
- DE-U- 8 812 396
- FR-A- 2 383 818
- FR-A- 2 426 558
- GB-A- 2 176 445

## Beschreibung

Die Erfindung betrifft eine Bearbeitungsstation für Fahrzeugkarosserien in einer Transferlinie mit den Merkmalen im Oberbegriff des Hauptanspruchs.

Eine solche Bearbeitsungsstation ist aus dem DE-GM 88 12 396.0 bekannt. Für die flexible Bearbeitung unterschiedlicher Fahrzeugkarosserien ist eine Wechselvorrichtung mit mehreren Spannrahmen vorgesehen, die jeweils für einen anderen Fahrzeugtyp bestimmt sind. Die Wechselvorrichtung ist als liegende Trommel mit einer längs der Transferlinie ausgerichteten Drehachse ausgebildet und befindet sich an der Arbeitsstelle neben der Transferlinie. Für die Schweißroboter ist damit seitlich neben der Transferlinie kein Platz. Es können nur Portalroboter eingesetzt werden, die über der Transferlinie positioniert sind und nur von oben her arbeiten können. Die eingeschränkte Erreichbarkeit der Fahrzeugkarosserie ist an sich nachteilig und führt außerdem zu einem erhöhten Bau- und Steuerungsaufwand.

Der Erfindung liegt die Aufgabe zugrunde, eine Bearbeitungsstation aufzuzeigen, in der die Spannrahmen mit geringerem Aufwand gewechselt werden können.

Die Erfindung löst diese Aufgabe mit den Merkmalen im Hauptanspruch.
Bei der erfindungsgemäßen Bearbeitungsstation befindet sich die Wechselvorrichtung über oder unter der bodenständigen Bearbeitungsvorrichtung, die vorzugsweise als Schweißroboter ausgebildet ist, aber auch in beliebig anderer Weise ausgebildet sein kann. Die Wechselvorrichtung umgreift damit glockenartig die Bearbeitungsvorrichtung. Hierdurch befindet sich zwischen der Bearbeitungsvorrichtung und der Arbeitsstelle nur der Spannrahmen, aber sonst kein Teil der Wechselvorrichtung. Die Wechselvorrichtung und die Bearbeitungsvorrichtung stören sich nicht gegenseitig, wodurch die Bearbeitungsvorrichtung behinderungsfrei neben der Transferlinie stehen kann.

Im bevorzugten Ausführungsbeispiel hängt die Wechselvorrichtung in einem Gestell und befindet sich direkt über der Bearbeitungsvorrichtung. Der Bodenbereich bleibt frei ist und ungehindert zugänglich.

Zum Wechsel des Spannrahmens braucht die Bearbeitungsvorrichtung nicht verfahren zu werden. Es genügt, wenn sie sich aus dem Bewegungsbereich des Spannrahmens zurückzieht. Dieser kann dann karussellartig durch eine Drehung um die vertikale Achse von der Arbeitsstelle entfernt werden, wobei zugleich ein anderer Spannrahmen in Position gebracht wird.

Mit der erfindungsgemäßen Wechselvorrichtung können Spannrahmen bei einem Typenwechsel der Fahrzeugkarosserie ausgetauscht werden. Desgleichen können die Spannrahmen auch Karosserieteile, insbesondere Seitenteile tragen und an die Arbeitsstelle zur Verbindung mit anderen Teilen der Fahrzeugkarosserie bringen. In diesem Fall können bei einer Drehung der Wechselvorrichtung leere Spannrahmen gegen beladene Spannrahmen getauscht werden. Die Spannrahmen können an der Wechselvorrichtung verbleiben und werden wieder mit neuen Karosserieteilen bestückt.

Die erfindungsgemäße Bearbeitungsstation erfordert insgesamt einen geringeren Bau- und Steuerungsaufwand als vorbekannte Konstruktionen. Sie ist ferner in der Lage, die Spannrahmen schneller zu wechseln. Ferner ist sie für eine Karosserieteilzuführung besser geeignet, da die leeren Spannrahmen leichter zugänglich sind. Durch die Entflechtung der Wechselvorrichtung und der Bearbeitungsvorrichtung können leere Spannrahmen während des Arbeitstaktes gleichzeitig wieder beladen werden.

In den Unteransprüchen sind weitere Vorteile der Ausgestaltungen der Erfindung angegeben.

Die Erfindung ist in den Zeichnungen beispielsweise und schematisch dargestellt. Im einzelnen zeigen
- Fig. 1:: die Bearbeitungsstation mit Wechselvorrichtung und Bearbeitungsvorrichtung auf einer Seite der Transferlinie in Seitenansicht und

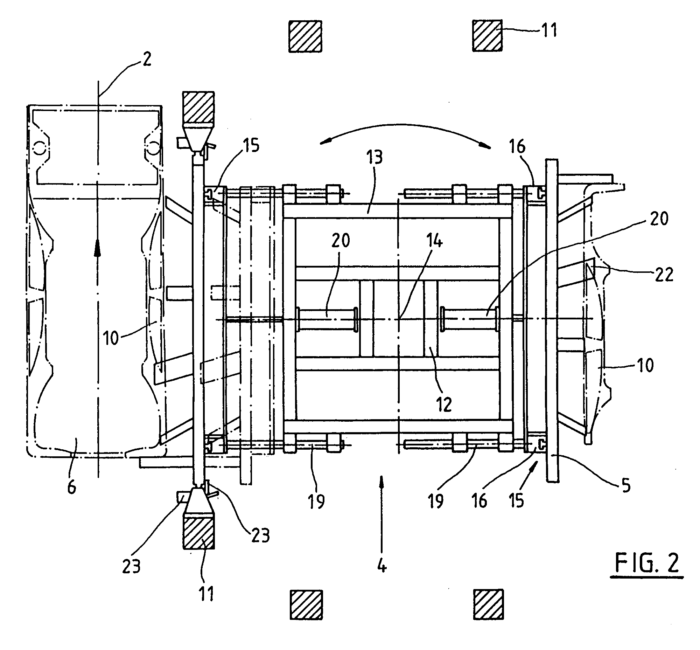

- Fig. 2:: die Anordnung von Fig. 1 in Draufsicht von oben.

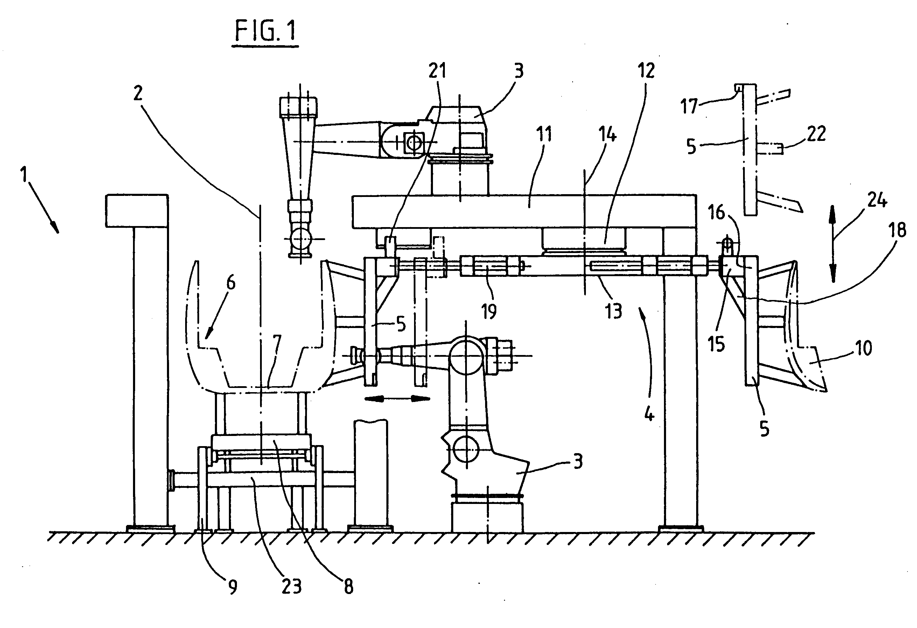

Fig. 1 zeigt in der Seitenansicht eine Bearbeitungsstation (1) an einer Transferlinie (2) für Karosserien (6) von Fahrzeugen. Die Bearbeitungsstation (1) kann auf einer oder auf beiden Seiten der Transferlinie (2) angeordnet sein. In der gezeigten Ausführungsform handelt es sich um eine Heftschweißstation. Es kann aber auch eine Aus- oder Fertigschweißstation sein. In weiterer Abwandlung können in der Bearbeitungsstation auch Montagevorgänge, spanabhebende oder sonstige Bearbeitungsvorgänge ablaufen.

In der Bearbeitungsstation (1) befindet sich mindestens eine bodenständige Bearbeitungsvorrichtung (3), die seitlich neben der Transferlinie (2) angeordnet ist. Im gezeigten Ausführungsbeispiel handelt es sich um ein oder mehrere mehrachsige Schweißroboter, die mit Ihrem Gestell am Boden befestigt sind. Die Roboter können auch noch zusätzlich Verfahrachsen besitzen, die allerdings nicht notwendig sind. Die Bearbeitungsstation (1) besitzt ein portalartiges Gestell (11), auf dem ggf. weitere Roboter (3) angeordnet sein können.

Die Bearbeitungsstation (1) ist Bestandteil einer Fertigungsstraße. Auf der Transferlinie (2) werden Teile der Fahrzeugkarosserie (6), beispielsweise Bodenteile (7) mit einer Transportvorrichtung (9) befördert. Die Bodenteile (7) sind jeweils auf einer Palette (8) lagegenau festgespannt.

Für die Bearbeitung der Karosserie (6), insbesondere das Heften der zunächst lose zusammengefügten Karosserieteile sind Spannrahmen (5) erforderlich. Diese halten die Karosserieteile in der gewünschten Fügeposition und sind mit geeigneten Spannwerkzeugen (22) versehen. Die Spannrahmen (5) sind jeweils auf einen oder auf einige wenige verwandte Karosserietypen adaptiert. Bei einem Karosseriewechsel werden die Spannrahmen (5) getauscht. Hierzu ist in der Bearbeitungsstation (1) eine Wechselvorrichtung (4) angeordnet.

Wie Fig. 1 verdeutlicht, ist die Wechselvorrichtung (4) über der bodenständigen Bearbeitungsvorrichtung (3) angeordnet und dabei hängend sowie um eine vertikale Drehachse (14) drehbar am Gestell (11) gelagert. Die Wechselvorrichtung (4) besitzt einen flachen, sich horizontal erstreckenden Rahmen (13), der über eine geeignete Drehvorrichtung (12) an einem Querträger des Gestells (11) aufgehängt ist. Der Rahmen (13) ist im wesentlichen rechteckig ausgebildet und trägt im gezeigten Ausführungsbeispiel zwei Spannrahmen (5) an gegenüberliegenden Seiten. Er kann alternativ auch vier Spannrahmen (5) tragen. Bei einer geeigneten Rahmengestaltung können es mehr als vier Spannrahmen (5) sein. Der Rahmen (13) kann sich mitsamt der Spannrahmen (5) innerhalb des Gestells (11) frei um 360° und mehr drehen.

Für jeden Spannrahmen (5) ist eine Zustellvorrichtung (19) vorgesehen, an der die Spannrahmen (5) über eine Aufnahme (15) hängend und vorzugsweise lösbar befestigt sind. In der gezeigten Ausführungsform besteht die Aufnahme (15) aus zwei von einander distanzierten Aufnahmeköpfen (15), auf die der Spannrahmen (5) mit seitlich wegragenden Aufnahmefingern (17) von oben eingehängt werden kann. Zur Lagesicherung während der Drehbewegung des Rahmens (13) sind schräge Fliehkraftstützen (18) vorgesehen, in die der Spannrahmen (5) eingeklinkt wird.

Die beiden Aufnahmeköpfe sind (16) sind an einer Verbindungsstange befestigt, die über einen geeigneten Antrieb (20), beispielsweise einen hydraulischen oder pneumatischen Zylinder, horizontal gegenüber dem Rahmen (13) verschoben werden kann. An die Rahmenköpfe (16) schließen rückseitig Führungsstangen an, die in passenden Buchsen am Rahmen (13) gleiten.

Am Dach des Gestells (11) ist zudem noch eine Führung (21) angeordnet, die aus zwei quer zur Transferlinie (2) sich erstreckenden Schienenstücken besteht. Die Aufnahmeköpfe (16) weisen jeweils einen Stützbügel auf, der über ein Laufwerk oder eine Gleitführung mit der Führungsschiene in Eingriff tritt und bei ausgefahrener Zustellvorrichtung (19) das Spannrahmengewicht abstützt.

Die Führung (21) ist kürzer als der Zustellweg und kommt erst nach einem gewissen Verfahrweg in Eingriff. In Fig. 1 ist dies durch die gestrichelte Darstellung des zurückgezogenen Spannrahmens (5) verdeutlicht. In dieser zurückgezogenen Position kann der Spannrahmen (5) bei einer Drehung der Wechselvorrichtung (4) an der Führung (21) vorbeibewegt werden.

Wie Fig. 1 zeigt, befinden sich alle Teile der Wechselvorrichtung (4) mit Abstand oberhalb der bodenständigen Bearbeitungsvorrichtung (3) und liegen damit im wesentlichen außerhalb des Arbeitsbereiches. Lediglich die Spannrahmen (5) hängen von den obenliegenden Aufnahmen (15) nach unten und bewegen sich auf einer Kreisbahn mit Abstand um die bodenständige Bearbeitungsvorrichtung (3) herum. Hierzu empfiehlt es sich auch, die vertikale Drehachse (14) gegenüber der Transferlinie (2) mit Abstand hinter der bodenständigen Bearbeitungsvorrichtung (3) anzuordnen.

An der Arbeitsstelle greift der Roboter (3) mit seinem Ausleger und dem Werkzeug durch den Spannrahmen (5) hindurch. Er ist nur so weit von der Transferlinie (2) beabstandet, daß er sich gerade hinter der in Fig. 1 gestrichelt dargestellten Rückzugsposition des Spannrahmens (5) bzw. der Zustellvorrichtung (19) befindet.

Zum Rahmenwechsel wird der Spannrahmen (5) von der Zustellvorrichtung (19) aus der Arbeitsposition zurückbewegt, bis er außer Eingriff mit der Führung (21) kommt. Zuvor hat sich der Roboter (3) aus dem Bewegungsbereich des Spannrahmens (5) zurückgezogen. Anschließend dreht der Rahmen (13) und bringt einen neuen Spannrahmen (5) in Position, der anschließend durch die Zustellvorrichtung (19) mit einem horizontalen Hub wieder in Arbeitsstellung an der Transferlinie (2) gebracht wird. Zur Sicherung und Fixierung des Spannrahmens (5) in der Arbeitsstellung ist an Gestell (11) eine Positioniervorrichtung (23) angeordnet, die beispielsweise mit kegeligen Indexen oder Spannrollen in Gegenhalter am Spannrahmen (5) greift. Mit einer ähnlichen Positioniervorrichtung (23) kann auch die Palette (8) in der Bearbeitungsstation (1) fixiert werden, so daß ein Lagebezug zischen dem Bodenteil (7) und dem Spannrahmen (5) besteht.

Im gezeigten Ausführungsbeispiel wird mit dem Spannrahmen (5) jeweils auch ein Karosserieteil (10), hier beispielsweise ein seitenteil der Arbeitsstelle zugeführt und dort mit dem Bodenteil (7) verschweißt. Durch die Wechselvorrichtung (4) wird nach Beendigung des Schweißvorgangs der leere Spannrahmen (5) entfernt und gegen einen neuen mit einem Seitenteil (10) beladenen Spannrahmen (5) getauscht. Während des Schweißprozesses kann gleichzeitig ein freier Spannrahmen (5) beladen werden. Zu diesem Zweck ist eine geeignete Zuführvorrichtung (24) auf der rückwärtigen Seite der Bearbeitungsstation (1) angeordnet. Die Zuführvorrichtung (24) kann beispielsweise als Einschienenhängebahn mit einem Hubgreifer ausgebildet sein. Sie ist in Fig. 1 der Übersicht halber nur durch einen Pfeil (24) symbolisiert.

Zum Zweck der Seitenteilzuführung bleiben die Spannrahmen (5) mit der Wechselvorrichtung (4) verbunden und werden an der Bearbeitungsstation (1) beladen. Alternativ ist es auch möglich, die Beladung an einer anderen Stelle vorzunehmen und über die Zuführvorrichtung (24) leere gegen beladene Spannrahmen (5) zu tauschen. In Abwandlung des gezeigten Ausführungsbeispiels können bereits die verschiedenen Teile der Karosserie (6) in einer vorgeschalteten Rüststation auf der Palette (8) gespannt werden und so in vorgefügter Form in die Bearbeitungsstation (1) gelangen. Die Spannrahmen (5) werden dann nur bei einem Wechsel des Karosserietyps getauscht.

Abwandlungen des gezeigten und beschriebenen Ausführungsbeispiels sind in verschiedener Form möglich. Zum einen kann die Wechselvorrichtung unter der Bearbeitungsvorrichtung angeordnet sein und mit stehenden Spannrahmen eine Art Karussell bilden.
Ferner kann die Zustellvorrichtung (19) in anderer Weise ausgebildet sein, beispielsweise als Schwenkmechanismus. Die horizontale Zustellbewegung kann alternativ auch durch eine Verschiebung des Rahmens (13) über dem Gestell (11) durchgeführt werden. Das Gestell (11) kann durch eine andere geeignete Stützkonstruktion ersetzt werden, die der Wechselvorrichtung (4) und der bodenständigen Bearbeitungsvorrichtung (3) die nötige Bewegungsfreiheit läßt.

Der Austausch der Spannrahmen (5) und/oder der Karosserieteile (10) findet im beschriebenen Ausführungsbeispiel an der Transferlinie (2) gegenüberliegenden Rückseite der Bearbeitungsstation (1) statt. Alternativ oder zustätzlich kann dies auch an den Querseiten geschehen. Ferner können die Spannrahmen (5) statt von oben auch von der Seite her mit den Aufnahmen (15) verbunden werden.

### BEZUGSZEICHENLISTE

- 1: Bearbeitungsstation
- 2: Transferlinie
- 3: Bearbeitungsvorrichtung, Roboter
- 4: Wechselvorrichtung
- 5: Spannrahmen
- 6: Karosserie
- 7: Bodenteil
- 8: Palette
- 9: Transportvorrichtung
- 10: Karosserieteil, Seitenteil
- 11: Gestell
- 12: Drehvorrichtung
- 13: Rahmen
- 14: Drehachse
- 15: Aufnahme
- 16: Aufnahmekopf
- 17: Aufnahmefinger
- 18: Fliehkraftstütze
- 19: Zustellvorrichtung
- 20: Antrieb
- 21: Führung
- 22: Spannwerkzeug
- 23: Positioniervorrichtung
- 24: Zuführvorrichtung

## Patentansprüche

1. Bearbeitungsstation für Fahrzeugkarosserien in einer Transferlinie mit einer drehbaren Wechselvorrichtung für einen oder mehrere Spannrahmen und mindestens einer Bearbeitungsvorrichtung, dadurch **gekennzeichnet**, daß die Wechselvorrichtung (4) eine vertikale Drehachse (14) aufweist und über oder unter einer bodenständigen, seitlich neben der Transferlinie (2) befindlichen Bearbeitungsvorrichtung (3) angeordnet ist, wobei sie die Bearbeitungsvorrichtung (3) glockenförmig umgreift.

2. Bearbeitungsstation nach Anspruch 1, dadurch **gekennzeichnet**, daß die Wechselvorrichtung (4) drehbar in einem portalartigen Gestell (11) aufgehängt ist.

3. Bearbeitungsstation nach Anspruch 1 oder 2, dadurch **gekennzeichnet**, daß die Wechselvorrichtung (4) einen Rahmen (13) mit mindestens einer quer zur Drehachse (14) beweglichen Zustellvorichtung (19) aufweist, die eine Aufnahme (15) für einen Spannrahmen (5) trägt.

4. Bearbeitungsstation nach Anspruch 3, dadurch **gekennzeichnet**, daß das Gestell (11) eine mit der Zustellvorrichtung (19) zusammenwirkende Führung (21) aufweist.

5. Bearbeitungsstation nach Anspruch 3 oder 4, dadurch **gekennzeichnet**, daß der Rahmen (13) rechteckig ausgebildet ist und zwei oder vier Spannrahmen (5) trägt.

6. Bearbeitungsstation nach Anspruch 1 oder einem der folgenden, dadurch **gekennzeichnet**, daß der einzelne Spannrahmen (5) hängend an der Wechselvorrichtung (4) angeordnet ist.

7. Bearbeitungsstation nach Anspruch 6, dadurch **gekennzeichnet**, daß die Wechselvorrichtung (4) eine Fliehkraftstütze (18) für den Spannrahmen (5) aufweist.

8. Bearbeitungsstation nach Anspruch 1 oder einem der folgenden, dadurch **gekennzeichnet**, daß der Spannrahmen (5) lösbar an der Aufnahme (15) befestigt ist.

9. Bearbeitungsstation nach Anspruch 1 oder einem der folgenden, dadurch **gekennzeichnet**, daß die Bearbeitungsvorrichtung (3) eine Positioniervorrichtung (23) aufweist, die den Spannrahmen (5) in der Arbeitstellung lagegenau fixiert.

10. Bearbeitungsstation nach Anspruch 1 oder einem der folgenden, dadurch **gekennzeichnet**, daß der Bearbeitungsstation eine Zuführvorrichtung (24) für die Übergabe von Karosserieteilen (10) an die Spannrahmen (5) und/oder für die Übergabe von Spannrahmen (5) an die Wechselvorrichtung (4) zugeordnet ist.

## Claims

1. Working station for vehicle bodies in a transfer line having a rotatable changing device for one or more clamping frames and having at least one working device, characterised in that the changing device (4) has a vertical axis of rotation (14) and is arranged above or below a floor-mounted working device (3) located laterally beside the transfer line (2), the said changing device encompassing the working device (3) in the form of a bell.

2. Working station according to Claim 1, characterised in that the changing device (4) is rotatably suspended in a portal-like framework (11).

3. Working station according to Claim 1 or 2, characterised in that the changing device (4) has a frame (13) with at least one feeding device (19) which is movable transversely to the axis of rotation (14) and carries a receptacle (15) for a clamping frame (5).

4. Working station according to Claim 3, characterised in that the framework (11) has a guide (21) which cooperates with the feeding device (19).

5. Working station according to Claim 3 or 4, characterised in that the frame (13) is of rectangular design and carries two or four clamping frames (5).

6. Working station according to Claim 1 or one of the subsequent claims, characterised in that the individual clamping frame (5) is arranged suspended from the changing device (4).

7. Working station according to Claim 6, characterised in that the changing device (4) has a centrifugal-force stay (18) for the clamping frame (5).

8. Working station according to Claim 1 or one of the subsequent claims, characterised in that the clamping frame (5) is detachably fastened to the receptacle (15).

9. Working station according to Claim 1 or one of the subsequent claims, characterised in that the working device (3) has a positioning device (23) which fixes the clamping frame (5) positionally accurately in the working position.

10. Working station according to Claim 1 or one of the subsequent claims, characterised in that the working station is associated with a supply facility (24) for transferring body parts (10) to the clamping frames (5) and/or for transferring clamping frames (5) to the changing device (4).

## Revendications

1. Poste d'usinage de carrosseries de véhicules dans une voie transfert, comportant un dispositif de changement, pouvant tourner, d'un ou de plusieurs cadres de blocage et au moins un dispositif d'usinage,
caractérisé en ce que
le dispositif (4) de changement comporte un axe (14) vertical de rotation et est monté au-dessus ou au-dessous d'un dispositif (3) d'usinage s'élevant du sol à côté de la voie (2) transfert, le dispositif de changement entourant à la manière d'une cloche le dispositif (3) d'usinage.

2. Poste d'usinage suivant la revendication 1,
caractérisé en ce que
le dispositif (4) de changement est suspendu, avec possibilité de rotation, à un bâti (11) du type portail.

3. Poste d'usinage selon la revendication 1 ou 2,
caractérisé en ce que
le dispositif (4) de changement comporte un cadre (13) comportant au moins un dispositif (19) d'avance mobile transversalement par rapport à l'axe (14) de rotation et portant un logement (15) pour un cadre (5) de blocage.

4. Poste d'usinage suivant la revendication 3,
caractérisé en ce que le bâti (11) comporte un guide (21) coopérant avec le dispositif (19) d'avance.

5. Poste d'usinage suivant la revendication 3 ou 4,
caractérisé en ce que le cadre (13) est de forme rectangulaire et porte deux ou quatre cadres (5) de blocage.

6. Poste d'usinage suivant la revendication 1 ou l'une des revendications suivantes,
caractérisé en ce que chaque cadre (5) de blocage est suspendu au dispositif (4) de changement.

7. Poste d'usinage suivant la revendication 6,
caractérisé en ce que le dispositif (4) de changement comporte un étai (18) contre la force centrifuge pour le cadre (5) de blocage.

8. Poste d'usinage suivant la revendication 1 ou l'une des suivantes,
caractérisé en ce que le cadre (5) de blocage est fixé au logement (15) avec possibilité d'en être enlevé.

9. Poste d'usinage suivant la revendication 1 ou l'une des suivantes,
caractérisé en ce que le dispositif (3) d'usinage comporte un dispositif (23) de positionnement, qui immobilise, dans la position de travail, le cadre (5) de blocage dans une position précise.

10. Poste d'usinage suivant la revendication 1 ou l'une des suivantes,
caractérisé en ce qu'il est associé au poste d'usinage un dispositif (24) d'amenée pour le transfert de pièces (10) de carrosserie aux cadres (5) de blocage et/ou pour le transfert de cadres (5) de blocage au dispositif (4) de changement.
